# EUROPEAN PATENT SPECIFICATION

(11) **EP 0 506 201 B1**
(45) Date of publication and mention of the grant of the patent: **02.08.1995**
(21) Application number: 92200868.5
(22) Date of filing: 26.03.1992
(51) Int. Cl.: H02G 3/12, H02G 3/14

(54) **Fitting box**
Einsatzdose
Boîtier de montage

(30) Priority: 27.03.1991 NL 9100547
(43) Date of publication of application: 30.09.1992
(73) Proprietor: VAN GEEL SYSTEMS B.V., NL-5282 WV Boxtel (NL)
(72) Inventor: van Geel, Jacobus Antonius Peter, NL-5281 JT Boxtel (NL)
(74) Representative: Hoorweg, Petrus Nicolaas

(56) References cited:
- DE-A- 2 037 779
- FR-A- 2 082 120

## Description

The invention relates to a fitting box of insulating material suitable for being able to receive electrical conductors and recessed fittings such as a wall socket, which box comprises a bottom with standing walls in addition to one or more flanges for fixing purposes arranged at or close to the free edge of the walls, wherein openings are arranged in the wall(s) for passage of the conductors as well as a rectangular cover portion for placing on the flanges.

Fitting boxes of the type described in the preamble serve to fix and also shield recessed fittings so that for instance no other parts or cables can become live undesirably due to a voltage-carrying wire coming loose. The recessed fitting is fixed to this fitting box using a framework or bracket, usually of steel. When a wire comes loose it may come into contact with the fixing, which can result in short-circuit onto touchable parts.

The invention has for its object to embody the fitting box of the type described in the preamble such that this danger of short-circuit is minimalized or prevented.

A fitting box in which a rectangular cover portion is hingeably connected to a wall of the bottom portion is disclosed in DE-A-2 037 779.

The fitting box according to the invention is distinguished in that the cover portion comprises a cover flat having along an edge thereof an edge part hingeably connected thereto which is provided with means for fixing the edge part to at least one flange of the box.

Through use of a cover over the box with recessed fitting the required distance is created between the voltage-carrying parts in the box and for instance a wall channel, which prevents the danger of short-circuit. Permanent attachment of the cover part onto the box prevents the possible case of the cover of the box being lost and no longer being refitted through oversight.

According to a further development of the invention the fixing means consist of at least one finger arranged on the edge part which can be placed through a close-fitting hole in the flange. A snap-in connection is hereby effected which simplifies fitting.

The invention is further elucidated in the figure description of an embodiment hereinbelow. In the drawing:
fig. 1 shows a perspective top view of the fitting box according to the invention,
fig. 2 is a standing cross section of the hinge part of the cover used in the fitting box of fig. 1,
fig. 3 is a rear view of the cover of fig. 2.

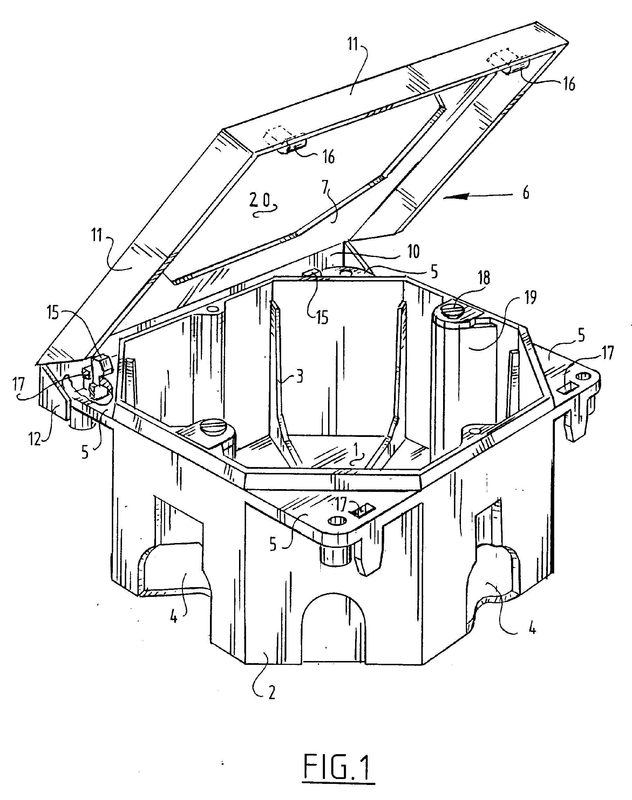

The fitting box of fig. 1 is provided with a bottom 1 with standing walls 2, which here form an octagonal arrangement on the bottom. Reinforcing ribs 3 are arranged on the inside of the box. The standing walls have through-feed openings 4 for passage of electrical conductors and the like. On the upper edge of the walls 2 remote from the bottom 1 is arranged a flange 5, this such that the peripheral edge of the flanges and the walls 2 has a rectangular form.

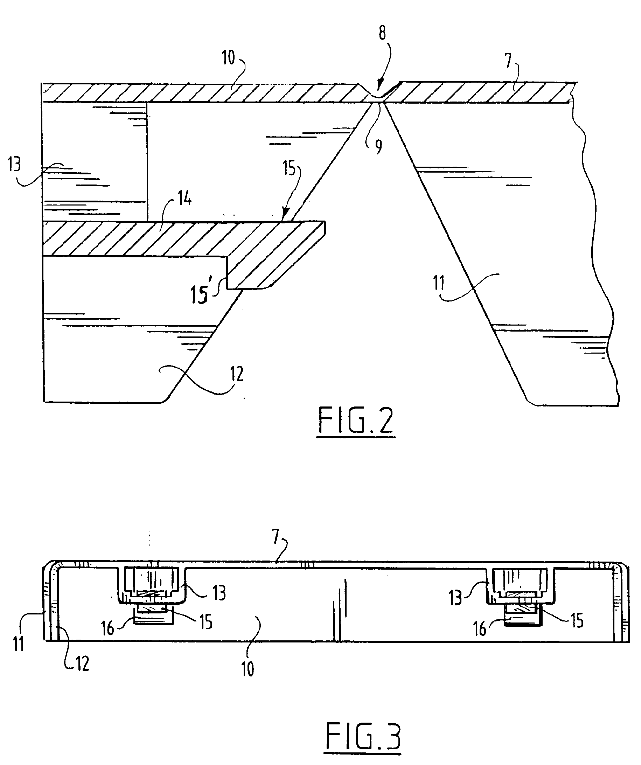

A rectangular cover 6 arranged according to the invention on the box is fixed to two flanges 5 in a manner to be further elucidated hereinafter, which cover, which here takes a square form, consists of a cover flat 7 which is connected along an edge 8 to an edge part 10 via a hinge piece 9, see also fig. 2 and 3. Arranged along the other edges of the cover flat 7 are edge strips 11 which are arranged at a perpendicular angle relative to the flat 7 in order to form a collar round the flanges 5 of the fitting box and the recessed fitting arranged in the box.

The edge part 10 is also embodied with edge strips 12 along the peripheral edges.

Arranged on the inside of edge part 10 is a bracket-like element 13 on which a hook-like finger 14 is integrally arranged, the body of which extends parallel to the edge part 10. The finger 14 takes a thickened form on the free end at nose 15 with a perpendicular stop surface 15′.

The edge strip 11 of cover flat 7 remote from edge part 10 is embodied on the inside with a thickening 16 in the form of a protrusion.

It is noted that the flanges 5 of the fitting box are embodied in each case with a through-hole 17 through which can be placed the thickened portion 15 of finger 14.

Fitting of the cover 6 on the fitting box itself takes place by pressing the noses 15 in each case through the opening 17 of the relevant flange 5, this being done from the underside so that in the mounted position the edge part 10 stands perpendicular to the plane of the flanges 5 and shields the outer edge thereof in adequate manner. Due to the hinge 9 the cover flat 7 can be folded down onto the top opening of the fitting box, wherein the protrusions 16 hook behind the leading edge of the opposite flanges 5.

It is further noted that the cover flat 7 is provided with an opening 20 situated above the opening in the fitting box when the cover flat has been folded down.

This opening 20 therefore enables fixing of the cover plate or plates forming part of the recessed fitting after the recessed fitting has itself been arranged by means of the per se known screws 18 present in screw columns 19 on the inside of the standing walls 2 and the cover flat 17 has been folded down.

The advantage achieved with the cover 6 is that this remains permanently fixed to the box as a result of the thickened fingers 14.

The invention is not limited to the above described embodiment.

## Claims

1. Fitting box of insulating material suitable for being able to receive electrical conductors and recessed fittings such as a wall socket, which box comprises a bottom (1) with standing walls (2) in addition to one or more flanges (5) for fixing purposes arranged at or close to the free edge of the walls, wherein openings (4) are arranged in the wall(s) for passage of the conductors as well as a rectangular cover portion (6) for placing on the flanges, **characterized in that** the cover portion (6) comprises a cover flat (7) having along one edge (8) thereof an edge part (10) hingeably connected thereto which is provided with means (13,14,15,17) for fixing the edge part (10) to at least one flange (5) of the box.

2. Fitting box as claimed in claim 1, **characterized in that** the means consist of at least a finger (14) arranged on the edge part (10) and a hole (17) close-fittingly receiving this finger in the said at least one flange (5) of the fitting box.

3. Fitting box as claimed in claim 2, **characterized in that** the finger (14) is arranged at a distance with respect to the edge part (10) and the finger extends parallel thereto.

4. Fitting box as claimed in claim 3, **characterized in that** the finger (14) is provided with a nose (15) facing away from the edge part.

5. Fitting box as claimed in any of the foregoing claims, **characterized in that** the cover (6) is provided along the other edges with edge strips (11) standing on the cover flat (7).

6. Fitting box as claimed in any of the foregoing claims, **characterized in that** the cover flat (7) is embodied with a mounting opening (20).

## Patentansprüche

1. Einsatzdose aus isolierendem Material, welches entsprechend in der Lage ist, elektrische Leiter und ausgebuchtete Einsätze wie eine Anschlußdose aufzunehmen, wobei die Dose sowohl einen Boden (1) mit stehenden Wänden (2), die zusätzlich zu einer oder mehreren Backe/Backen (5) für Befestigungszwecke an oder nahe bei der freien Kante der Wände angeordnet sind, wobei Öffnungen (4) in der Wand/den Wänden zum Durchführen der Leiter angeordnet sind, als auch einen rechteckigen Deckelabschnitt (6) zum Anbringen auf den Backen aufweist, dadurch gekennzeichnet,
daß der Deckelabschnitt (6) eine Deckelfläche (7) aufweist, die entlang eine ihrer Kanten (8) einen damit schwenkbar verbundenen Kantenabschnitt (10) aufweist, der mit Mitteln (13, 14, 15, 17) zum Befestigen des Kantenabschnitts (10) an mindestens einer Backe (5) der Dose versehen ist.

2. Einsatzdose nach Anspruch 1, dadurch gekennzeichnet,
daß die Mittel aus mindestens einem Finger (14), der auf dem Kantenabschnitt (10) angeordnet ist, und einem Loch (17) bestehen, welches knapp passend diesen Finger in dieser mindestens einen Backe (5) der Einsatzdose aufnimmt.

3. Einsatzdose nach Anspruch 2, dadurch gekennzeichnet,
daß der Finger (14) mit einem Abstand in bezug auf den Kantenabschnitt (10) angeordnet ist und der Finger sich parallel dazu erstreckt.

4. Einsatzdose nach Anspruch 3, dadurch gekennzeichnet,
daß der Finger (14) mit einer Nase (15) versehen ist, die von dem Kantenabschnitt wegweist.

5. Einsatzdose nach einem der vorstehenden Ansprüche, dadurch gekennzeichnet,
daß der Deckel (6) entlang der anderen Kanten mit Kantenstreifen (11) versehen ist, die auf der Deckelfläche (7) stehen.

6. Einsatzdose nach einem der vorstehenden Ansprüche, dadurch gekennzeichnet,
daß die Deckelfläche (7) mit einer Montageöffnung (20) ausgebildet ist.

## Revendications

1. Boîte de montage en matériau isolant adaptée pour recevoir des conducteurs électriques et des accessoires encastrés tels qu'une prise murale, la boîte comprenant un fond (1) muni de parois (2) dressées en plus d'un ou plusieurs flasques (s) servant à fixer agencés sur le bord libre des parois ou près de ces bords, dans laquelle des ouvertures (4) sont agencées dans la ou les parois (s) destinées au passage de conducteur ainsi qu'une partie (6) formant couvercle rectangulaire destinée à être placée sur les flasques, caractérisée en ce que la partie (6) formant couvercle comporte un élément plat (7) de couvercle comportant le long d'un bord (8) de celui-ci une partie (10) de bord reliée par charnière à celui-ci munie de moyens (13,14,15,17) pour fixer la partie (10) de bord à au moins un flasque (5) de la boîte.

2. Boîte de montage selon la revendication 1, caractérisée en ce que les moyens comprennent au moins un doigt (14) agencé dans la partie (10) de bord et un trou (17) recevant par ajustage rapproché le doigt dans ledit au moins un flasque (5) de la boîte de montage.

3. Boîte de montage selon la revendication 2, caractérisée en ce que le doigt (14) est agencé à distance de la partie (10) de bord et le doigt s'étend parallèlement à celle-ci.

4. Boîte de montage selon la revendication 3, caractérisée en ce que le doigt (14) comporte un nez (15) tourné à l'opposé de la partie de bord.

5. Boîte de montage selon l'une quelconque des revendications précédentes, caractérisée en ce que le couvercle (6) est muni, le long des autres bords, de bandes (11) de bord dressées sur l'élément plat (7) de couvercle.

6. Boîte de montage selon l'une quelconque des revendications précédentes, caractérisée en ce que l'élément (7) de couvercle est réalisé avec une ouverture (20) de montage.
